# EUROPÄISCHE PATENTSCHRIFT

(11) **EP 1 589 355 B1**
(45) Veröffentlichungstag und Bekanntmachung des Hinweises auf die Patenterteilung: **28.03.2007**
(21) Anmeldenummer: 05003350.5
(22) Anmeldetag: 17.02.2005
(51) Int. Cl.: G01V 8/20, F16P 3/14

(54) **Verfahren zur Justage einer Sicherheitseinrichtung und optoelektronische Sicherheitseinrichtung**
Method to adjust a security system and an optoelectronic security system
Méthode pour ajuster un système de sécurité et un système de sécurité optoéléctronique

(30) Priorität: 08.04.2004 DE 102004017285
(43) Veröffentlichungstag der Anmeldung: 26.10.2005
(73) Patentinhaber: SICK AG, 79183 Waldkirch (DE)
(72) Erfinder: Bergbach, Roland, 79341 Kenzingen (DE); Grabinger, Jörg, 79312 Emmendingen (DE); Angenendt, Christoph, 79108 Freiburg (DE)
(74) Vertreter: Ludewigt, Christoph

(56) Entgegenhaltungen:
- EP-A- 1 246 148
- WO-A-03/104711
- US-A1- 2003 024 421
- US-B1- 6 316 763

## Beschreibung

Die Erfindung betrifft ein Verfahren zur Justage einer optoelektronischen Sicherheitseinrichtung einer gefahrbringenden Maschine, wie Biegepresse oder dergleichen sowie eine optoelektronische Sicherheitseinrichtung.

Die Erfindung ist nicht auf Biegepressen im engeren Sinne begrenzt und kann ebenso bei Abkantpressen, Stanzmaschinen, Schneidemaschinen und anderen Maschinen verwendet werden, bei denen Maschinenteile gefahrbringende Arbeitsbewegungen gegeneinander ausführen. Bei einer Biegepresse erfolgt die Umformung des Werkstücks im Wesentlichen dadurch, dass das Werkstück mit einem Biegestempel gegen eine Matrize gepresst wird. Die gewünschte Formgebung lässt sich durch entsprechende Ausbildung des Biegestempels und der Matrize erreichen. Häufig ist der Biegestempel ein Werkzeug, das an einem ersten, beweglichen Maschinenteil angeordnet ist, während die Matrize an einem zweiten, feststehenden Maschinenteil sitzt. Da es jedoch nur auf die Relativbewegung der beiden Maschinenteile zueinander ankommt, kann alternativ auch die Matrize bewegt sein oder es können beide Maschinenteile gegeneinander bewegt werden. Die erfindungsgemäße Sicherheitseinrichtung und das erfindungsgemäße Verfahren zur Justierung der Sicherheitseinrichtung kann in allen genannten Fällen zur Anwendung kommen.

Da von einer Biegepresse eine erhebliche Gefahr für das Bedienpersonal ausgeht, insbesondere die Gefahr von Quetschungen oder Abtrennung von Körperteilen, ist es bekannt, optoelektronische Sicherheitseinrichtungen vorzusehen, wie dies beispielsweise aus der WO 03/104711 bekannt ist. Bei dieser Einrichtung sind an dem sich bewegenden Maschinenteil ein Lichtsender und ein kameraartiger Lichtempfänger fest angeordnet, so dass ein von dem ausgedehnten Strahl parallelen Lichts definierte Schutzfeld auf einen Eingriff hin überwacht werden kann. Das Schutzfeld erstreckt sich entlang der Werkzeugkante des sich bewegenden Werkzeugteils.

Beim Einsatz dieser Sicherheitseinrichtung muss zur sicheren Funktion bei der Montage eine exakte Justage berücksichtigt werden. Die erforderliche exakte Justage ist unter anderem darin begründet, dass das Empfangselement zweidimensional ausgebildet ist, beispielsweise aus mehreren einzelnen Photoelementen matrixförmig zusammengefügt ist. Eine fehlerhafte Justage hätte nämlich zur Folge, dass die Informationen, die in der Lichtverteilung des Lichtbündelquerschnittes liegen, nicht vollständig oder falsch ausgewertet werden. Die erforderliche Sicherheit wäre nicht gewährleistet.

Zur Justage ist deshalb nach der WO 03/104711 vorgesehen, dass auf dem Sender und dem Empfänger eine Maske gesetzt werden kann, mit der ein Muster, beispielsweise ein Kreuz, vom Sender erzeugt und bei korrekter Justage durch die Empfängermaske hindurch auf den Empfänger gelangt. Nachteilig bei diesem bekannten Verfahren zur Justage ist, dass damit nur eine relativ grobe Ausrichtung erreicht werden kann, so dass auch die Detektionssicherheit der Sicherheitseinrichtung entsprechend begrenzt ist.

Ausgehend von diesem Stand der Technik liegt der Erfindung die Aufgabe zugrunde, ein verbessertes Verfahren zur Justage einer Sicherheitseinrichtung bereitzustellen, wodurch eine exaktere Ausrichtung des Empfängers auf den Lichtsender erreicht werden kann sowie eine entsprechende Sicherheitseinrichtung bereitzustellen.

Zur Lösung dieser Aufgabe sieht die Erfindung ein Verfahren mit den Merkmalen des Anspruchs 1 vor sowie eine Sicherheitseinrichtung mit den Merkmalen des Anspruchs 10.

Der wesentliche Vorteil des erfindungsgemäßen Verfahrens besteht darin, dass durch die Kombination von optischer Vorjustage und danach weiterer Feinjustage mittels Auswertung der Signale des Lichtempfängers eine erheblich verbesserte Justierung erreicht werden kann. Dies ist überraschend, da bisher die Meinung herrschte, dass eine optische Justage schon eine ausreichende Ausrichtung bewirke. Dabei wird für die Vor- und Feinjustage dieselbe Konfiguration benutzt, d.h. es werden dieselben Justageblenden verwendet, so dass die komplette Justage in einem Stück durchgeführt werden kann.

Insgesamt wird so eine optimal justierte Sicherheitseinrichtung erhalten, wodurch nicht nur die Sicherheit aufgrund der Vermeidung einer Fehljustage erhöht ist, sondern auch eine optimale Funktion hinsichtlich der Objekterkennung über den Lichtstrahlquerschnitt und damit über den Schutzfeldquerschnitt gewährleistet ist. Durch eine Verbesserung der Objekterkennung besteht die Möglichkeit, dass die Einrichtung auch noch weitere Nicht-Sicherheitszwecke, wie beispielsweise die Vermessung von Objekten innerhalb des Schutzfeldes, erfüllen kann.

Je kleiner der Strahlquerschnitt des Justagelichtstrahls ist, desto genauer kann die Justage sein, so dass der Justagelichtstrahl vorteilhafterweise einen möglichst kleinen Strahlquerschnitt aufweist, aber dennoch auf der Zielscheibe sichtbar ist. Dabei ist es vorteilhaft und erhöht die Genauigkeit der Justage weiterhin, wenn der vom Lichtsender erzeugt parallele Lichtstrahl, der den Schutzbereich definiert, einen großen Strahlquerschnitt hat, damit eine große Zielscheibe mit einem großem Fangbereich einsetzbar ist.

Wenn der Justagelichtstrahl nach Durchtritt durch die zweite Justageblende an einer optischen Grenzfläche in der Empfangsoptik teilreflektiert wird, muss keine gesonderte Spiegelfläche vorgesehen sein.

Die Feinjustage erfolgt vorteilhafterweise mittels einer elektronischen Anzeige, die die Abweichung des Auftreffpunktes des nicht reflektierten Teils des Justagestrahls auf dem Lichtempfänger vom Soll-Auftreffpunkt anzeigt.

Eine sehr einfach gestaltete und kostengünstige, aber dennoch aussagekräftige Anzeige ist durch eine Sieben-Segment-Anzeige gegeben, die allerdings nur die Richtung der Abweichung mittels Symbolik anzeigen kann. Das reicht aber für eine Justage aus.

Zusätzlich zur Ausrichtung von Lichtsender und Lichtempfänger ist in Weiterbildung der Erfindung vorgesehen, dass der Justagelichtstrahl auch parallel zu einer die Gefahr bringenden Werkzeugkante ausgerichtet wird.

Dies geschieht vorteilhafterweise durch dritte Justageblenden, die an beiden Seiten der Werkzeugkante ausgerichtet angesetzt werden. Der Justagelichtstrahl und damit der Lichtsender wird dann derart ausgerichtet, dass er Öffnungen beider dritten Justageblenden durchsetzt.

Mit Vorteil werden zwei zusätzliche Hilfs-Justagelichtstrahlen parallel zum ersten erzeugt, damit die Justage vereinfacht und schneller durchführbar wird. Durch die Verwendung der zwei zusätzlichen Hilfs-Justagelichtstrahlen lässt sich der eigentliche Justierstrahl besser auffinden und in den jeweiligen Phasen des Justierprozesses eine Vorjustierung durchführen.

Vorzugsweise ist die Zielscheibe auf der zweiten Justageplatte als Mattscheibe ausgebildet. Durch die Kombination von Justageblende und Zielscheibe kann eine Komponente eingespart werden. Eine Mattscheibe hat den Vorteil, dass der den Justagezustand anzeigende Lichtspot in seiner Intensität wenig gedämpft wird und dadurch mit gutem Kontrast sichtbar ist.

Die Erfindung wird im Folgenden anhand eines Ausführungsbeispiels unter Bezugnahme auf die Zeichnung im Einzelnen erläutert. In der Zeichnung zeigen:
- Fig. 1: eine schematische Frontansicht einer Biegepresse mit einer erfindungsgemäßen Sicherheitseinrichtung;
- Fig. 2: eine schematische Darstellung der Sicherheitseinrichtung im Schnitt entlang deren optischer Achse;
- Fig. 3: eine Ansicht wie Fig. 2 mit erster und zweiter Justageblende;
- Fig. 4, 5 und 6: erste, zweite und dritte Justageblenden;
- Fig. 7: eine schematische Ansicht eines Lichtempfängers der erfindungsgemäßen Sicherheitseinrichtung.
- Fig. 8: eine Gesamtansicht wie Fig. 1 mit Justageblenden an der Sicherheitseinrichtung;

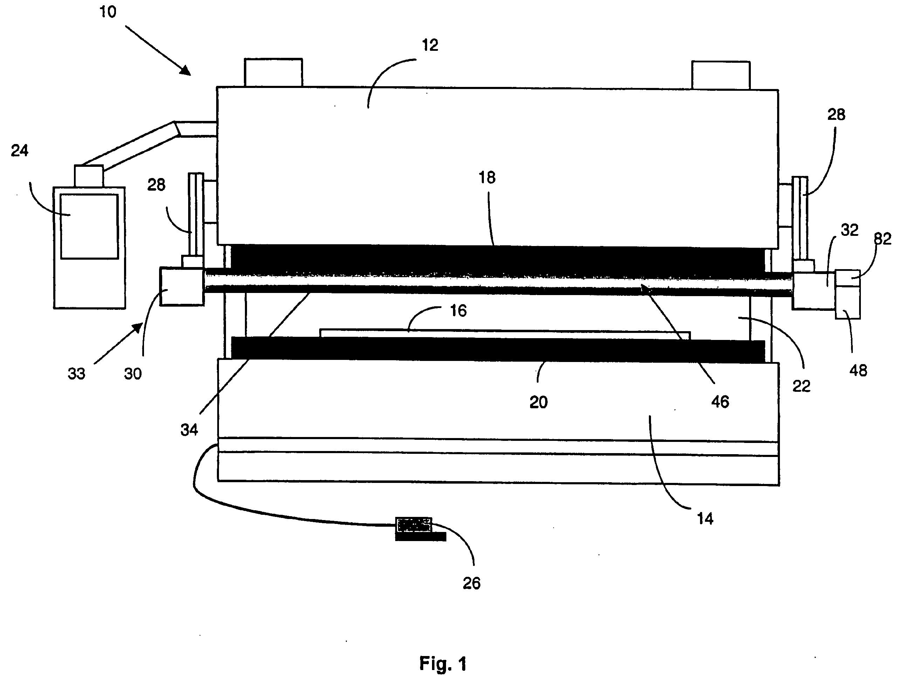

Eine in Fig. 1 gezeigte Gesenkbiegepresse 10 besitzt ein Oberwerkzeug 12, das zu einer Arbeitsbewegung vertikal nach unten gegen ein Unterwerkzeug 14 angetrieben werden kann, um ein auf dem Unterwerkzeug 14 aufliegendes Werkstück 16 zu biegen. Das Oberwerkzeug 12 und das Unterwerkzeug 14 besitzen Werkzeugkanten 18 und 20, die eine entsprechende Form aufweisen, um das Werkstück 16 in eine bestimmte Form zu biegen. Während der Arbeitsbewegung wird ein Öffnungsspalt 22 zwischen dem Oberwerkzeug 12 und dem Werkstück 16 allmählich geschlossen. Die Gesenkbiegepresse 10 wird gesteuert von einer Steuerung 24 und kann beispielsweise durch einen Fußschalter 26 aktiviert werden.

An beiden Seiten des Oberwerkzeugs 12 ist jeweils ein Haltearm 28 vorgesehen. Die Haltearme 28 tragen einen Lichtsender 30 und einen ortsauflösenden Empfänger 32, die Teile einer optoelektronischen Sicherheitseinrichtung 33 sind. Der Lichtsender 30 besitzt eine Lichtquelle 36, beispielsweise eine Laserdiode und eine Sendeoptik 38, die das Sendelicht zu einem parallelen Lichtstrahl 34 aufweitet. Der Empfänger 32 ist kameraartig aufgebaut und besitzt einen ortsauflösenden zweidimensionalen Lichtempfänger 40, beispielsweise einen CMOS-Matrix-Empfänger, der von dem Lichtstrahl 34 beaufschlagt wird. Über eine Empfangsoptik 42 wird das Licht auf den Lichtempfänger 40 abgebildet. Ein optisches Filter 44, dessen Durchlassbereich auf die Wellenlänge des Lichtsenders 36 abgestimmt ist, kann Umgebungslicht filtern und verbessert somit das Signal/Rausch-Verhältnis.

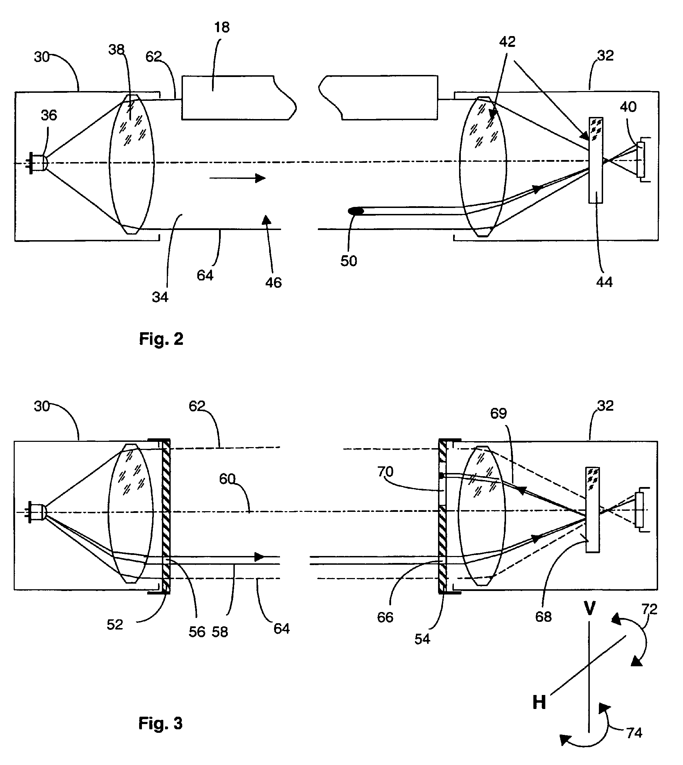

Der parallel aufgeweitete Lichtstrahl 34 durchquert den Öffnungsspalt 22 entlang der Unterkante 18 des Oberwerkzeugs 12. Durch den Lichtstrahl 34 ist ein volumenförmiger Schutzbereich 46 definiert mit Randstrahlen 62 und 64. Durch den Lichtempfänger 40 kann erkannt werden, ob der Lichtstrahl 34 ganz oder teilweise unterbrochen ist (Fig. 2). Dazu ist eine Auswerteeinrichtung 48 vorgesehen, die z.B. an dem Empfänger 32 oder auch in der Maschinensteuerung 24 angeordnet sein könnte. Wenn eine zumindest teilweise Unterbrechung des Lichtstrahls 34 innerhalb des Schutzbereichs 46 vorliegt, wie dies beispielsweise durch ein Objekt 50, das ein Finger sein könnte, verursacht sein könnte, wird dies durch die Abbildung auf den ortsauflösenden Lichtempfänger 40 erkannt (Fig. 2). In der Auswerteeinrichtung 48 können Bedingungen abgeprüft werden, ob das Objekt z.B. ein zulässiges ist oder nicht. Wenn in der Auswerteeinrichtung 48 schließlich eine Gefahr durch das Eindringen des Objektes 50 in den Schutzbereich 46 erkannt wird, wird ein Schaltsignal ausgelöst, beispielsweise zum Anhalten des Oberwerkzeugs 12. Dadurch wird eine Bedienperson vor Verletzungen durch das Oberwerkzeug 12 geschützt.

Damit der Schutzbereich 46 direkt an der Werkzeugkante 18 anschließt, sind der Sender 30 und der Empfänger 32 derart angeordnet, dass ein Teil der Werkzeugkante 18 in den Lichtstrahl 34 hineinragt. Zwar wird dann die Werkzeugkante 18 auf den ortsauflösenden Lichtempfänger 40 abgebildet, aber diese Abbildung wird in der Auswerteeinheit 48 als zulässig erkannt. Dies kann z.B. durch Speicherung eines Referenzbildes oder ähnlichem realisiert sein.

Wie aus Fig. 2 zu erkennen ist, ist der Lichtstrahl 34 derart aufgeweitet, dass er die Empfangsoptik des Empfängers 32 im Wesentlichen voll ausleuchtet. Damit auch bei Vibrationen der Lichtempfänger 40 stets getroffen wird, ist der Querschnitt des Lichtstrahls 34 am Ort des Lichtempfängers 32 kleiner als der Lichtempfänger 40.

Anhand der Fig. 3 werden im Folgenden die wesentlichen Prinzipien des Justageverfahrens erläutert.

In einem ersten Schritt werden Sender 30 und Empfänger 32 zueinander ausgerichtet. Dazu wird eine erste Justageblende 52 vor den Sender 30 montiert und eine zweite Justageblende 54 vor den Empfänger 32. Die Montage erfolgt dabei reproduzierbar derart, dass die Justageblenden 52 und 54 exakt in einer gewünschten Weise zu Sender 30 bzw. Empfänger 32 ausgerichtet sind. Die erste Justageblende 52 weist eine kleine Öffnung 56 auf, durch die ein Teil des Lichtstrahls 34 durchgelassen wird und somit einen Justagelichtstrahl 58 mit kleinem Querschnitt bildet, der parallel zur optischen Achse 60 verläuft. Der größte Teil des Lichtstrahls 34 ist ausgeblendet, wie dies durch gestrichelte Darstellung der ansonsten vorhandenen Randstrahlen 62 und 64 angedeutet ist.

Der Sender 30 wird nun so ausgerichtet, dass der Justagestrahl 58 eine Öffnung 66 der zweiten Justageplatte 54 trifft und in die Empfangsoptik 42 des Empfängers 32 eintritt. Damit ist der Sender 30 auf den Empfänger 32 ausgerichtet.

Zur Ausrichtung des Empfängers 32 auf den Sender 30 wird der in die Empfangsoptik eingetretene Justagestrahl 58 an einer optischen Grenzfläche 68 teilreflektiert. Der reflektierte Teil 69 trifft auf eine in der zweiten Justageplatte 54 angeordnete Zielscheibe 70, die als Mattscheibe ausgebildet ist. Auf der Mattscheibe 70 ist ein Soll-Ziel 76 markiert, so dass durch Drehen des Empfängers 32 in Pfeilrichtungen 72 und 74 um zwei zueinander senkrechte Achsen V und H der Empfänger 32 so ausgerichtet wird, dass der reflektierte Teil 69 des Justagestrahls 58 das Ziel trifft. Dann ist der Empfänger zumindest grob nach Augenmaß ausgerichtet.

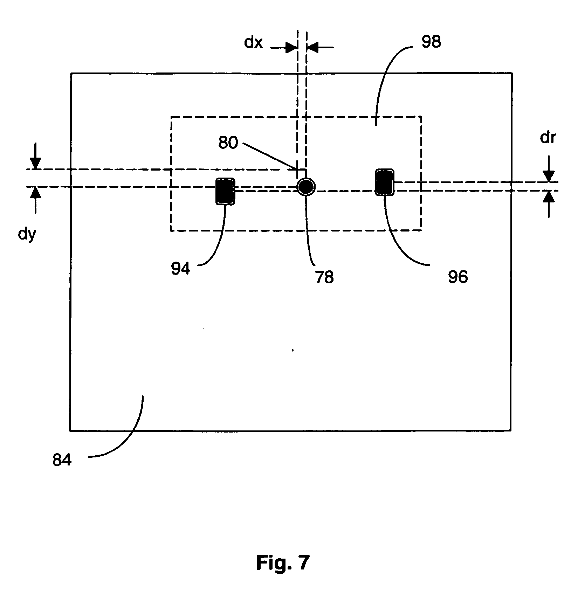

Danach wird in einem weiteren Schritt der Auftreffpunkt 78 des Justagelichtstrahls 58 auf dem ortsauflösenden Lichtempfänger 40 festgestellt und eine Abweichung dx bzw. dy von einem Soll-Auftreffpunkt 80 ermittelt. Dies ist schematisch auch in Fig. 7 dargestellt, die eine Ansicht der Detektorfläche 84 des ortsauflösenden Lichtempfängers 40 zeigt. Der Soll-Auftreffpunkt 80 ist mittels eines Kreuzes dargestellt. Die Abweichungen dx und dy werden mittels einer elektronischen Anzeige 82 dargestellt. Wie weiter unten erläutert, ist die Anzeige 82 als Sieben-Segment-Anzeige ausgebildet. Nun kann der Empfänger 32 durch weiteres definiertes Drehen in Richtungen 72 und 74 exakt ausgerichtet werden, bis der Auftreffpunkt 78 auf dem Soll-Auftreffpunkt 80 liegt.

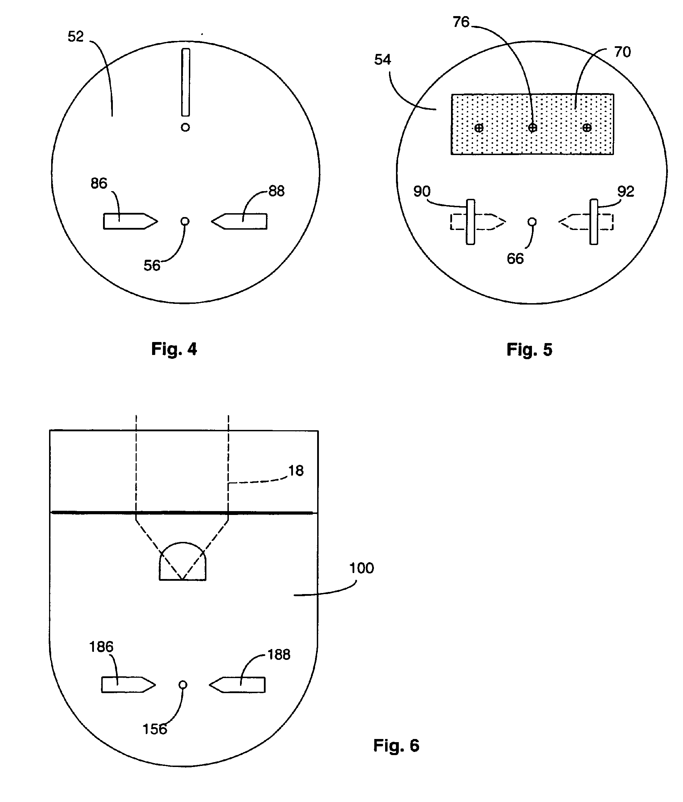

In Weiterbildung der Erfindung sind noch weitere Justageschritte vorgesehen, die zusätzlich zu den bereits erläuterten vorgesehen sind und im Folgenden anhand der Fig. 4 bis 7 erläutert werden.

Fig. 5 zeigt die erste Justageblende 54 in Draufsicht. Jeweils neben der Öffnung 56 weist die Justageblende 54 noch zwei Schlitzöffnungen 86 und 88 auf, durch die Licht des Lichtstrahls 34 tritt, zur Bildung von zwei Hilfs-Justagelichtstrahlen. Diese werden für die Grobausrichtung nach Augenmaß genauso eingesetzt, wie oben in Bezug auf den Justagestrahl 58 beschrieben. Die Hilfs-Justagestrahlen vereinfachen dabei die Justage, da sie wegen ihres größeren Querschnitts aufgrund der Schlitzöffnungen 86 und 88 zu Beginnn der Justage, wenn die Sicherheitseinrichtung noch unjustiert ist, besser zu finden sind. Dabei weist die zweite Justageblende 54 ebenfalls zwei zweite Schlitzöffnungen 90 und 92 auf, wobei hier jedoch die Längsrichtungen der Schlitzöffungen 90 und 92 senkrecht zu den Längsrichtungen der ersten Schlitzöffnungen 86 und 88 liegen. Bei in etwa korrekter Ausrichtung von Sender 30 und Empfänger 32 wird dann nur ein in etwa rechteckiger Teilquerschnit der Hilfs-Justagestrahlen durchgelassen.

Dieser auch von der zweiten Justageblende 54 durchgelassene Teil der Hilfs-Justagestrahlen hat eine besondere Bedeutung für die Feinjustage mittels des Lichtempfängers 40, wie anhand der Fig. 7 erläutert wird. Bei den Bezugsziffern 94 und 96 ist der Auftreffpunkt der Hilfs-Justagelichtstrahlen dargestellt. Wie bereits aus der Darstellung hervorgeht, ist mit den Hilfs-Justagestrahlen auch eine Verdrehung dr des Empfängers gegenüber den Justagestrahlen feststellbar und eine entsprechende Korrektur möglich. Ausserdem dienen die Hilfs-Justagestrahlen auch einem leichteren Auffinden der Auftreffpunkte, die im Justageprozess nur als Justagelichtstrahlen erkannt werden, wenn sie in einem bestimmten Suchbereich 98 der Detektorfläche 84 liegen.

Die entsprechenden Auftreffpunkte 78, 94 und 96 werden von dem Lichtempfänger 40 gemessen und die Abweichungen dx, dy und die Verdrehung dr an der Anzeige 82 ausgegeben. Die Anzeige 82 ist als Sieben-Segment-Anzeige ausgebildet, womit die Abweichungen oder besser gesagt die Richtungen der Abweichungen sehr einfach und bildlich darstellbar sind und zwar nach den Vorgaben der nachfolgenden Tabelle

| | |
|---|---|
| 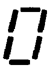 | Keine Auftreffpunkte detektiert |
| 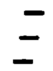 | Ungültiges Muster, zu viele Punkte |
| 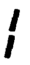 | Alle Auftreffpunkte links der Zielpunkte |
| 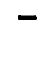 | Alle Auftreffpunkte oberhalb der Zielpunkte |
| 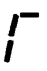 | Alle Auftreffpunkte links oberhalb der Zielpunkte |
| 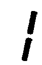 | Alle Auftreffpunkte rechts der Zielpunkte |
| 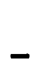 _ | Alle Auftreffpunkte unterhalb der Zielpunkte |
| 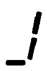 | Alle Auftreffpunkte rechts unterhalb der Zielpunkte |
| 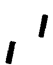 | Auftreffpunkte des zentralen Justierstrahls im Ziel aber Hilfs-Justagestrahlen linksverdreht |
| 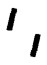 | Auftreffpunkte des zentralen Justierstrahls im Ziel aber Hilfs-Justagestrahlen rechtsverdreht |
| 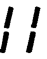 | Abstand zwischen den Auftreffpunkten der Hilfs-Justagestrahlen außerhalb der Toleranz (Fehler) |
| 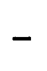 | Alle Auftreffpunkte in den Zielpunkten |

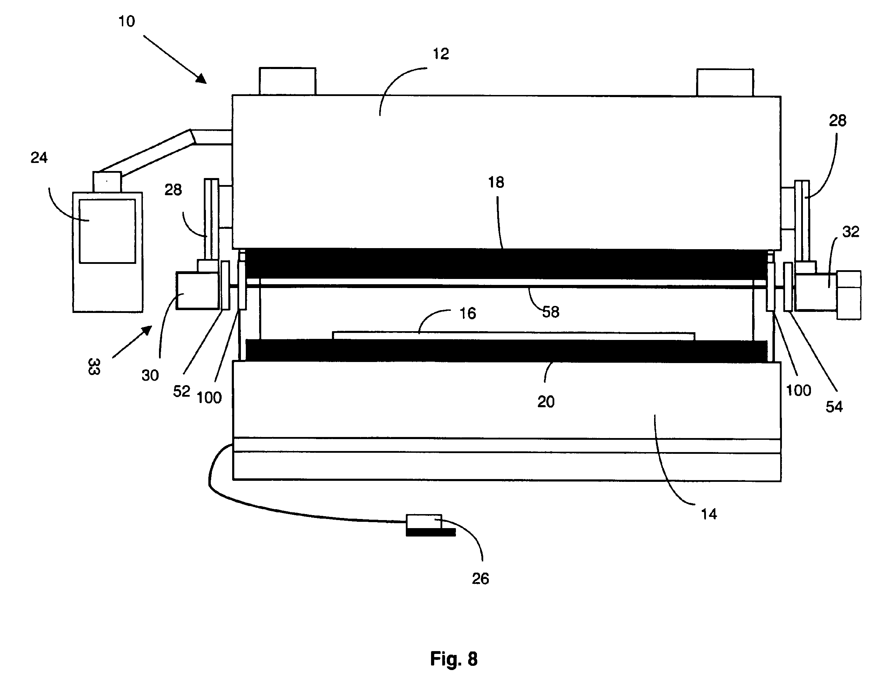

Des Weiteren sind zwei dritte Justageblenden 100 vorgesehen, mit Hilfe derer die Sicherheitseinrichtung 33 derart ausgerichtet werden kann, dass der Lichtstrahl 34 exakt parallel zur Werkzeugkante 18 verläuft. Die beiden dritten Justageblenden 100 sind identisch ausgebildet und weisen wie die erste Justegablende 52 eine Öffnung 156 für den zentralen Justagelichtstrahl und zwei Schlitzöffnungen 186 und 188 für die Hilfs-Justagelichtstrahlen auf. Die Justageblenden 100 werden an den Enden der Werkzeugkante 18 in fest vorgegebener Weise montiert, z.B. magnetisch befestigt. Die Fig. 8 zeigt die Gesenkbiegepresse 10 mit dem erfindungsgemäßen Sicherheitssystem 33 mit montierten ersten, zweiten und dritten Justageblenden 52, 54 und 100. Wenn der Justagestrahl 58 und die Hilfs-Justagestrahlen die entsprechenden Öffnungen 56, 86, 88 bzw, 156, 186, 188 der ersten und dritten Justageblenden 52 und 100 treffen, ist der Lichtstrahl 34 exakt parallel zur Werkzeugkante ausgerichtet. Danach kann der Empfänger 32 exakt ausgerichtet werden, wie oben beschrieben.

## Patentansprüche

1. Verfahren zur Justage einer optoelektronischen Sicherheitseinrichtung (33) einer gefahrbringenden Maschine, wie Biegepresse (10) oder dergleichen, mit folgenden Verfahrensschritten:
- Erzeugen wenigstens eines Justagelichtstrahls (58) parallel aber außerhalb der optischen Achse (60) durch Positionieren einer ersten Justageblende (52) vor einem Lichtsender (30),
- Positionieren einer zweiten Justageblende (54) vor einem Empfänger (32),
- Ausrichten des Lichtsenders (30) derart, dass der Justagelichtstrahl (58) durch eine Öffnung (66) der zweiten Justageblende (54) hindurchtritt,
- Ausrichten des Empfängers (32) derart, dass der Justagelichtstrahl (58) einen Soll-Auftreffpunkt (80) trifft,
**dadurch gekennzeichnet, dass**
- der durch die Öffnung (66) der zweiten Justageblende (54) hindurchgetretene Justagelichtstrahl (58) teilreflektiert wird und
- der Empfänger (32) zunächst nach Augenmaß ausgerichtet wird, indem ein Auftreffpunkt des reflektierten Teils (69) des Justagelichtstrahls (58) sichtbar eine Zielscheibe (70) trifft und auf ein Soll-Ziel (76) ausgerichtet wird und
- dass danach der Auftreffpunkt (78) des nicht reflektierten Teils des Justagestrahls (58) auf dem Empfänger (40) elektronisch bestimmt wird und mit einem Soll-Auftreffpunkt (80) auf dem Empfänger (40) in einer Auswerteeinheit (48) verglichen wird.

2. Verfahren nach Anspruch 1, **dadurch gekennzeichnet, dass** der Justagelichtstrahl (58) einen möglichst kleinen Strahlquerschnitt aufweist, aber dennoch auf der Zielscheibe (70) sichtbar ist.

3. Verfahren nach Anspruch 1 oder 2, **dadurch gekennzeichnet, dass** der Justagelichtstrahl (58) an einer optischen Grenzfläche (68) in einer Empfangsoptik (42) teilreflektiert wird.

4. Verfahren nach einem der vorhergehenden Ansprüche, **dadurch gekennzeichnet, dass** die Abweichung (dx, dy) des Auftreffpunktes (78) des nicht reflektierten Teils des Justagestrahls (58) auf dem Lichtempfänger (40) vom Soll-Auftreffpunkt (80) an einer elektronischen Anzeige (82) angezeigt wird.

5. Verfahren nach Anspruch 4, **dadurch gekennzeichnet, dass** nur die Richtung der Abweichung mit Symbolen angezeigt wird.

6. Verfahren nach einem der vorhergehenden Ansprüche, **dadurch gekennzeichnet, dass** der Justagelichtstrahl (58) parallel zu einer die Gefahr bringenden Werkzeugkante (18) ausgerichtet wird.

7. Verfahren nach Anspruch 6, **dadurch gekennzeichnet, dass** dritte Justageblenden (100) an beiden Enden der Werkzeugkante (18) ausgerichtet angesetzt werden und der Justagelichtstrahl (58) derart ausgerichtet wird, dass er Öffnungen (156) beider dritten Justageblenden (100) durchsetzt.

8. Verfahren nach einem der vorhergehenden Ansprüche, **dadurch gekennzeichnet, dass** zwei zusätzliche Hilfs-Justagelichtstrahlen parallel zum ersten erzeugt werden.

9. Verfahren nach einem der vorhergehenden Ansprüche, **dadurch gekennzeichnet, dass** mit Hilfe der zwei zusätzlichen Hilfs-Justagelichtstrahlen Sender (30) und Empfänger (32) in den jeweiligen Phasen des Justierprozesses vorjustiert werden.

10. Optoelektronische Sicherheitseinrichtung für eine Maschine, insbesondere eine Biegepresse (10), mit einem Lichtsender (30) mit Sendeoptik (38) zum Ausleuchten eines Schutzbereichs (46) mit parallelem Licht, einem zweidimensionalen Lichtempfänger (40) mit Empfangsoptik (42, 44) zum Empfangen des Sendelichtes, und mit einer Auswerte- und Steuereinrichtung (48) zum Erzeugen eines Schaltsignals, z. B. zum Anhalten eines ersten Werkzeugteils (12), wenn ein Eingriff in den Schutzbereich (46) durch den Lichtempfänger (40) erkannt wurde und wobei der Schutzbereich (46) parallel zu einer Werkzeugkante (18) des ersten Werkzeugs (12) verläuft, weshalb der Lichtsender (30) und der Lichtempfänger (40) an den Enden des ersten Werkzeugs (12) montiert sind, mit einer ersten Justageblende (52) zum Aufsetzen auf den Lichtsender (30), zum Erzeugen eines Justagelichtstrahls (58) und mit einer zweiten Justageblende (54) zum Aufsetzen auf den Lichtempfänger (32), zum Durchlassen des Justagelichtstrahls (58) in die Empfangsoptik (42, 44), **dadurch gekennzeichnet, dass** in der Empfangsoptik (42, 44) eine optische Grenzfläche (68) vorgesehen ist, zur Teilreflektion des Justagestrahls (58) und auf der zweiten Justageblende (54) eine Zielscheibe (70) angeordnet ist zur optischen Anzeige des reflektierten Teils (69) des Justagestrahls (58) zur Vorjustage und dass die Auswerteeinheit Mittel aufweist, zum Erkennen und Ausgeben einer Abweichung (dx, dy) eines Auftreffpunktes (78) des nichtreflektierten Teils des Justagelichtstrahls (58) von einem Soll-Auftreffpunkt (80).

11. Sicherheitseinrichtung nach Anspruch 10, **dadurch gekennzeichnet, dass** die Zielscheibe eine Mattscheibe (70) ist.

12. Sicherheitseinrichtung nach einem der vorhergehenden Ansprüche 10 bis 11, **dadurch gekennzeichnet, dass** zwei weitere Hilfs-Justagelichtstrahlen mittels der ersten Justageblende (52) erzeugbar sind.

13. Sicherheitseinrichtung nach einem der vorhergehenden Ansprüche 10 bis 12, **dadurch gekennzeichnet, dass** zwei dritte, identisch ausgebildete Justageblenden (100) vorgesehen sind, zur Ausrichtung des Lichtstrahls parallel zu der Werkzeugkante (18).

14. Sicherheitseinrichtung nach einem der vorhergehenden Ansprüche 10 bis 13, **dadurch gekennzeichnet, dass** eine elektronische Anzeige (82) vorgesehen ist, zur Anzeige der Richtung der Abweichung des Auftreffpunktes (78) des Justierstrahls (58) vom Soll-Auftreffpunkt (80).

15. Sicherheitseinrichtung nach Anspruch 14, **dadurch gekennzeichnet, dass** die Anzeige (82) eine Sieben-Segment-Anzeige ist.

## Claims

1. Method for the alignment of an optoelectronic safety device (33) in a hazardous machine, such as a bending press (10) or the like, having the following method steps:
- producing at least one alignment light beam (58) parallel to but outside the optical axis (60) by positioning a first alignment diaphragm (52) in front of a light transmitter (30),
- positioning a second alignment diaphragm (54) in front of a receiver (32),
- orienting the light transmitter (30) such that the alignment light beam (58) passes through an opening (66) in the second alignment diaphragm (54),
- orienting the receiver (32) such that the alignment light beam (58) strikes a desired impingement point (80),
**characterized in that**
- the alignment light beam (58) which passed through the opening (66) in the second alignment diaphragm (54) is partially reflected and
- the receiver (32) is initially oriented by eye by virtue of an impingement point of the reflected portion (69) of the alignment light beam (58) visibly striking a target screen (70) and being oriented towards a desired target (76) and
- **in that**, thereafter, the impingement point (78) of the non-reflected portion of the alignment beam (58) on the receiver (40) is determined electronically and is compared to a desired impingement point (80) on the receiver (40) in an evaluation unit (48).

2. Method according to Claim 1, **characterized in that** the alignment light beam (58) has as small a beam cross section as possible, but is still visible on the target screen (70).

3. Method according to Claim 1 or 2, **characterized in that** the alignment light beam (58) is partially reflected on an optical interface (68) in a receiving optical system (42).

4. Method according to one of the preceding claims, **characterized in that** the deviation (dx, dy) of the impingement point (78) of the non-reflected portion of the alignment beam (58) on the light receiver (40) from the desired impingement point (80) is displayed on an electronic display (82).

5. Method according to Claim 4, **characterized in that** only the direction of the deviation is displayed using symbols.

6. Method according to one of the preceding claims, **characterized in that** the alignment light beam (58) is oriented parallel to a hazardous die edge (18).

7. Method according to Claim 6, **characterized in that** third alignment diaphragms (100) are mounted in a manner such that they are oriented on both ends of the die edge (18) and the alignment light beam (58) is oriented such that it passes through openings (156) in both third alignment diaphragms (100).

8. Method according to one of the preceding claims, **characterized in that** two additional auxiliary alignment light beams are produced parallel to the first one.

9. Method according to one of the preceding claims, **characterized in that** transmitter (30) and receiver (32) are pre-aligned in the respective phases of the alignment process with the aid of the two additional auxiliary alignment light beams.

10. Optoelectronic safety device for a machine, in particular a bending press (10), having a light transmitter (30) with a transmitting optical system (38) for illuminating a protection zone (46) using parallel light, a two-dimensional light receiver (40) with a receiving optical system (42, 44) for receiving the transmitted light, and having an evaluation and control device (48) for producing a switching signal, for example for stopping a first die part (12) if an intrusion into the protection zone (46) was recognized by the light receiver (40), and wherein the protection zone (46) runs parallel to a die edge (18) of the first die (12), for which reason the light transmitter (30) and the light receiver (40) are installed at the ends of the first die (12), having a first alignment diaphragm (52) for fitting on the light transmitter (30) for producing an alignment light beam (58) and having a second alignment diaphragm (54) for fitting on the light receiver (32) for allowing through the alignment light beam (58) into the receiving optical system (42, 44), **characterized in that** an optical interface (68) is provided in the receiving optical system (42, 44) for the partial reflection of the alignment beam (58) and a target screen (70) is arranged on the second alignment diaphragm (54) for the optical display of the reflected portion (69) of the alignment beam (58) for the pre-alignment, and **in that** the evaluation unit has means for recognizing and outputting a deviation (dx, dy) of an impingement point (78) of the non-reflected portion of the alignment light beam (58) from a desired impingement point (80).

11. Safety device according to Claim 10, **characterized in that** the target screen is a ground glass screen (70).

12. Safety device according to one of the preceding Claims 10 to 11, **characterized in that** two further auxiliary alignment light beams can be produced by means of the first alignment diaphragm (52).

13. Safety device according to one of the preceding Claims 10 to 12, **characterized in that** two third alignment diaphragms (100) of identical design are provided for the orientation of the light beam parallel to the die edge (18).

14. Safety device according to one of the preceding Claims 10 to 13, **characterized in that** an electronic display (82) is provided for the display of the direction of the deviation of the impingement point (78) of the alignment beam (58) from the desired impingement point (80).

15. Safety device according to Claim 14, **characterized in that** the display (82) is a seven segment display.

## Revendications

1. Procédé pour ajuster un dispositif de sécurité (33) optoélectronique d'une machine faisant courir des risques, comme une presse plieuse (10) ou similaire, comprenant les étapes de procédé suivantes:
- génération d'au moins un faisceau de lumière d'ajustage (58) parallèlement à l'axe (60) optique, mais à l'extérieur de celui-ci par positionnement d'un premier diaphragme d'ajustage (52) devant un émetteur de lumière (30),
- positionnement d'un second diaphragme d'ajustage (54) devant un récepteur (32),
- alignement de l'émetteur de lumière (30) de telle sorte que le faisceau de lumière d'ajustage (58) passe par une ouverture (66) du second diaphragme d'ajustage (54),
- alignement du récepteur (32) de telle sorte que le faisceau de lumière d'ajustage (32) rencontre un point d'impact de consigne (80),
**caractérisé en ce que**
- le faisceau de lumière d'ajustage (58) passé à travers l'ouverture (66) du second diaphragme d'ajustage (54) est partiellement réfléchi et
- le récepteur (32) est agencé d'abord à vu d'oeil par le fait qu'un point d'impact de la partie (69) réfléchie du faisceau de lumière d'ajustage (58) touche de façon visible une cible (70) et est axé sur une cible de consigne (76) et
- **en ce qu'**ensuite le point d'impact (78) de la partie non réfléchie du faisceau d'ajustage (58) est déterminé électroniquement sur le récepteur (40) et est comparé dans une unité d'analyse (48) avec un point d'impact de consigne (80) sur le récepteur (40).

2. Procédé selon la revendication 1, **caractérisé en ce que** le faisceau de lumière d'ajustage (58) présente une section de faisceau la plus petite possible, mais est visible sur la cible (70).

3. Procédé selon la revendication 1 ou 2, **caractérisé en ce que** le faisceau de lumière d'ajustage (58) est partiellement réfléchi sur une surface limite (68) optique dans une optique de réception (42).

4. Procédé selon l'une quelconque des revendications précédentes, **caractérisé en ce que** l'écart (dx, dy) du point d'impact (78) de la partie non réfléchie du faisceau d'ajustage (58) sur le récepteur de lumière (40) par rapport au point d'impact de consigne (80) est affiché sur un affichage (82) électronique.

5. Procédé selon la revendication 4, **caractérisé en ce que** seule la direction de l'écart est affichée avec des symboles.

6. Procédé selon l'une quelconque des revendications précédentes, **caractérisé en ce que** le faisceau de lumière d'ajustage (58) est orienté parallèlement à une arête d'outil (18) faisant courir le risque.

7. Procédé selon la revendication 6, **caractérisé en ce que** des troisièmes diaphragmes d'ajustage (100) sont placés orientés sur les deux extrémités de l'arête d'outil (18) et le faisceau de lumière d'ajustage (58) est orienté de telle sorte qu'il traverse des ouvertures (156) des deux troisièmes diaphragmes d'ajustage (100).

8. Procédé selon l'une quelconque des revendications précédentes, **caractérisé en ce que** deux faisceaux de lumière d'ajustage auxiliaires supplémentaires sont générés parallèlement au premier.

9. Procédé selon l'une quelconque des revendications précédentes, **caractérisé en ce que** l'émetteur (30) et le récepteur (32) sont préajustés dans les phases respectives du processus d'ajustage à l'aide des deux faisceaux de lumière d'ajustage auxiliaires supplémentaires.

10. Dispositif de sécurité optoélectronique pour une machine, en particulier une presse plieuse (10), avec un émetteur de lumière (30) avec optique d'émission (38) pour l'éclairage d'une zone de protection (46) avec lumière parallèle, un récepteur de lumière (40) à deux dimensions avec optique de réception (42, 44) pour la réception de la lumière d'émission, et avec un dispositif d'analyse et de commande (48) pour générer un signal de commutation, par exemple pour arrêter une première partie d'outil (12) lorsqu'un engagement dans la zone de protection (46) a été détecté par le récepteur de lumière (40) et la zone de protection (46) étant agencée parallèlement à une arête d'outil (18) du premier outil (12), raison pour laquelle l'émetteur de lumière (30) et le récepteur de lumière (40) sont montés sur les extrémités du premier outil (12), avec un premier obturateur d'ajustage (52) pour la pose sur l'émetteur de lumière (30) pour générer un faisceau de lumière d'ajustage (58) et avec un second diaphragme d'ajustage (54) à poser sur le récepteur de lumière (32), pour laisser passer le faisceau de lumière d'ajustage (52) dans l'optique de réception (42, 44), **caractérisé en ce que** dans l'optique de réception (42, 44) est prévue une surface limite (68) optique, pour la réflexion partielle du faisceau d'ajustage (58) et sur le second diaphragme d'ajustage (54) est disposé une cible (70) pour l'affichage optique de la partie (69) réfléchie du faisceau d'ajustage (58) pour le préajustage et **en ce que** l'unité d'analyse présente des moyens pour reconnaître et éditer un écart (dx, dy) d'un point d'impact (78) de la partie non réfléchie du faisceau de lumière d'ajustage (58) par rapport à un point d'impact de consigne (80).

11. Dispositif de sécurité selon la revendication 10, **caractérisé en ce que** la cible est un verre dépoli (70).

12. Dispositif de sécurité selon l'une quelconque des revendications 10 à 11, **caractérisé en ce que** deux autres faisceaux de lumière d'ajustage auxiliaires peuvent être générés au moyen du premier diaphragme d'ajustage (52).

13. Dispositif de sécurité selon l'une quelconque des revendications précédentes 10 à 12, **caractérisé en ce que** deux troisièmes diaphragmes d'ajustage (100) conçus de façon identique sont prévus, pour l'orientation du faisceau de lumière parallèlement à l'arête d'outil (18).

14. Dispositif de sécurité selon l'une quelconque des revendications 10 à 13, **caractérisé en ce qu'**un affichage (82) électronique est prévu pour l'affichage de la direction de l'écart du point d'impact (78) du faisceau d'ajustage (58) par rapport au point d'impact de consigne (80).

15. Dispositif de sécurité selon la revendication 14, **caractérisé en ce que** l'affichage (82) est un affichage à sept segments.
